# EUROPÄISCHE PATENTANMELDUNG

(11) **EP 1 340 927 A2**
(43) Veröffentlichungstag der Anmeldung: **03.09.2003**
(21) Anmeldenummer: 03002358.4
(22) Anmeldetag: 04.02.2003
(51) Int. Cl.: F16F 9/44

(54) **Ventilschieber**

(30) Priorität: 02.03.2002 DE 10209367
(71) Anmelder: ThyssenKrupp Bilstein GmbH, 58256 Ennepetal (DE)
(72) Erfinder: Askevold, Lennart Dipl.-Ing., Sterling Heights, MI 48310 (US)

(57) **Zusammenfassung**

Um bei einem Ventilschieber (1) für ein Bypassventil an einem hydraulischen Schwingungsdämpfer mit einem Schaft (16) und einem Teller (17), welcher mit einer umlaufenden scheibenartig ausgebildeten Dichtkante (12), innerhalb der eine Ausnehmung (13) angeordnet ist, ausgebildet ist und der Durchbrüche (Bohrungen 17) zur Rückseite aufweist, die zuziehenden Kräfte, hervorgerufen durch die hohen Durchströmgeschwindigkeiten an der Dichtkante (12), zu reduzieren, sind die Durchbrüche (26) durch den Teller (17) größtmöglich, nur Speichen (25) zwischen der Dichtkante (12) und dem Schaft (16) belassend, ausgebildet.

## Beschreibung

Die Erfindung betrifft einen Ventilschieber für ein Bypassventil an einem hydraulischen Schwingungsdämpfer nach dem Oberbegriff des Anspruchs 1.

Derartige Ventilschieber sind allgemein bekannt und werden in der unterschiedlichsten Form hergestellt und verwendet. Die DE 35 35 287 A1 zeigt einen derartigen Ventilschieber. Dieser Ventilschieber wird über einen Elektromagneten gegen die Kraft einer Schraubenfeder mehr oder weniger weit geöffnet. Als Dichtsitz weist der Ventilschieber eine umlaufende schneidenartig ausgebildete Dichtkante auf, die mit einem ebenen Dichtsitz zusammenwirkt. Innerhalb der Dichtkante ist eine Ausnehmung vorgesehen. Durchbrüche zur Rückseite des Ventilschiebers bewirken den hydraulischen Druckausgleich.

Die gattungsgemäßen Ventilschieber werden überwiegend so betrieben, dass zwischen Dichtsitz und Dichtkante nur ein äußerst geringer Spalt eingestellt wird. Das führt bei hohen Druckdifferenzen zu hohen Durchströmgeschwindigkeiten. Hervorgerufen durch diese hohen Durchströmgeschwindigkeiten stellt sich auch noch innerhalb der Ausnehmung ein großer Unterdruck ein, der den Ventilschieber zu schließen sucht. Diese Kraft muss durch den Magneten ausgeglichen werden, was nachteilig zu einem unruhigen Regelverhalten des Ventilschiebers führt und wodurch weiterhin nachteilig eine erhöhte Energie für den Magneten benötigt wird.

Der Erfindung liegt die Aufgabe zugrunde, die zuziehenden Kräfte am Ventilschieber, hervorgerufen durch die hohen Durchströmgeschwindigkeiten an der Dichtkante zu reduzieren.

Diese Aufgabe wird mit einem Ventilschieber, der die Merkmale des Anspruchs 1 aufweist, gelöst. Vorteilhafte Aus- und Weiterbildungen sind in den Ansprüchen 2 und 3 beschrieben.

Die mit der Erfindung erzielten Vorteile bestehen insbesondere darin, dass die zuziehenden Kräfte am Ventilschieber reduziert sind. Weiterhin vorteilhaft weist der Ventilschieber eine geringere Masse auf, wodurch die Massenträgheit reduziert ist und ein besseres Regelverhalten erreicht wird.

Ein Ausführungsbeispiel der Erfindung ist in der Zeichnung dargestellt und wird im Folgenden näher beschrieben. Es zeigen
Figur 1 ein Bypassventil mit einem Ventilschieber nach dem Stand der Technik,
Figur 2 einen Schnitt durch einen Ventilschieber nach der Erfindung und
Figur 3 die Draufsicht auf einen Ventilschieber nach Figur 2.

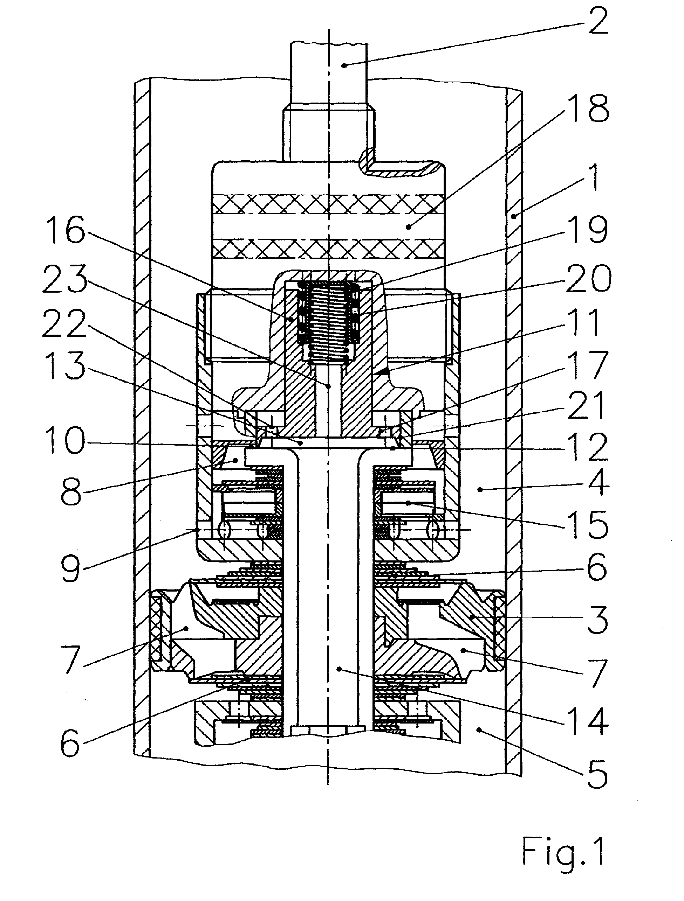

Hydraulische Schwingungsdämpfer, wie sie z. B. abschnittsweise in Figur 1 dargestellt sind, weisen üblicherweise ein Dämpferrohr 1 auf, in dem sich die Dämpfungsflüssigkeit befindet. Ein an einer Kolbenstange 2 angebundener Arbeitskolben 3 trennt den Innenraum des Dämpferrohres in zwei Arbeitsräume 4, 5. Der Arbeitskolben 3 weist mittels Federscheiben 6 abgedeckte Durchbrüche 7 auf, die zusammenwirkend den Durchfluss der Dämpfungsflüssigkeit zwischen den Arbeitsräumen 4 und 5 dämpfen. Für besondere Regelungszwecke wird parallel zu den Durchbrüchen 7 ein Bypass eingerichtet, der über ein Ventil kontinuierlich oder nur in seiner Endstellung geöffnet und geschlossen werden kann. Im Ausführungsbeispiel ist der Bypass mit dem zugehörigen Bypassventil zwischen den Arbeitskolben 3 und der Kolbenstange 2 angeordnet. Andere Anordnungen, sei es innerhalb des Schwingungsdämpfers, beispielsweise am Bodenventil oder außerhalb des Schwingungsdämpfers, über Kanäle mit den Arbeitsräumen 4 und 5 verbunden, wirken in gleicher Weise.

Der Bypass im Ausführungsbeispiel weist Ringkanäle 8 auf, die über Zulaufbohrungen 9 mit dem oberen Arbeitsraum 4 verbunden sind und als Radialschlitze 10 am Außenumfang eines Ventilschiebers 11 enden. Der Ventilschieber 11 weist eine umlaufende, schneidenartig ausgebildete Dichtkante 12 auf, innerhalb der sich eine Ausnehmung 13 befindet. Die hydraulische Verbindung zwischen der Ausnehmung 13 und dem unteren Arbeitsraum 5 erfolgt durch eine zentrale Bohrung 14. Beim Anheben des Ventilschiebers 11 wird der Hydraulikweg des Bypasses über Zulaufbohrung 9, Ringkanal 8, Radialschlitz 10, Ausnehmung 13 und zentrale Bohrung 14 freigeschaltet. Im Ausführungsbeispiel ist in diese hydraulische Verbindung noch ein Vorventil 15 geschaltet.

Der Ventilschieber 11 weist einen Schaft 16 und einen Teller 17 auf. Im Ausführungsbeispiel sind Schaft 16 und Teller 17 einteilig ausgebildet. Der so gestaltete Ventilschieber 11 kann beispielsweise aus einem magnetisierbaren Werkstoff durch Sintern hergestellt werden.

Die Spule eines Magnetventils 18 zieht je nach Strombeaufschlagung den Ventilschieber 11 gegen die Kraft einer oder, wie im Ausführungsbeispiel gezeigt, zweier Wendelfedern 19, 20 an und hebt somit die Dichtkante 12 von einem im Ausführungsbeispiel ebenen Dichtsitz 21 mehr oder wenig an, so dass der Bypasskanal mehr oder wenig geöffnet ist.

Um eine sichere Regelung zu gewährleisten, wird die Rückseite des Ventilschiebers hydraulisch entlastet. Das erfolgt durch Bohrungen 22 durch den Teller 17 des Ventilschiebers 11 und durch eine zentrale Bohrung 23 durch den Schaft 16.

Bei der Ausbildung eines Ventilschiebers 11 nach dem Stand der Technik, wie diese in Figur 1 dargestellt ist, ergibt sich die Problematik, dass bei hohem Druckunterschied zwischen den Arbeitsräumen 4 und 5 und geringer Öffnung des Ventilschiebers 11 sich zwischen der Dichtkante 12 und dem Dichtsitz 21 hohe Strömungsgeschwindigkeiten einstellen, was zu einem großen Unterdruck nicht nur unter der Dichtkante 12, sondern auch in der Ausnehmung 13 führt. Dieser Unterdruck kann so groß sein, dass es sogar zu Kavitationserscheinungen kommt. Durch die sehr unterschiedliche Strömung mit Wirbeln und Kavitation in der Ausnehmung 13 wird dieser Unterdruck nicht sicher durch die Bohrungen 22 auf die Rückseite des Tellers 17 übertragen, ebenso nicht auf die Rückseite des Schaftes 16, da sich die Unterdruckverhältnisse an der zentralen Bohrung 23 schon wieder ausgeglichen haben.

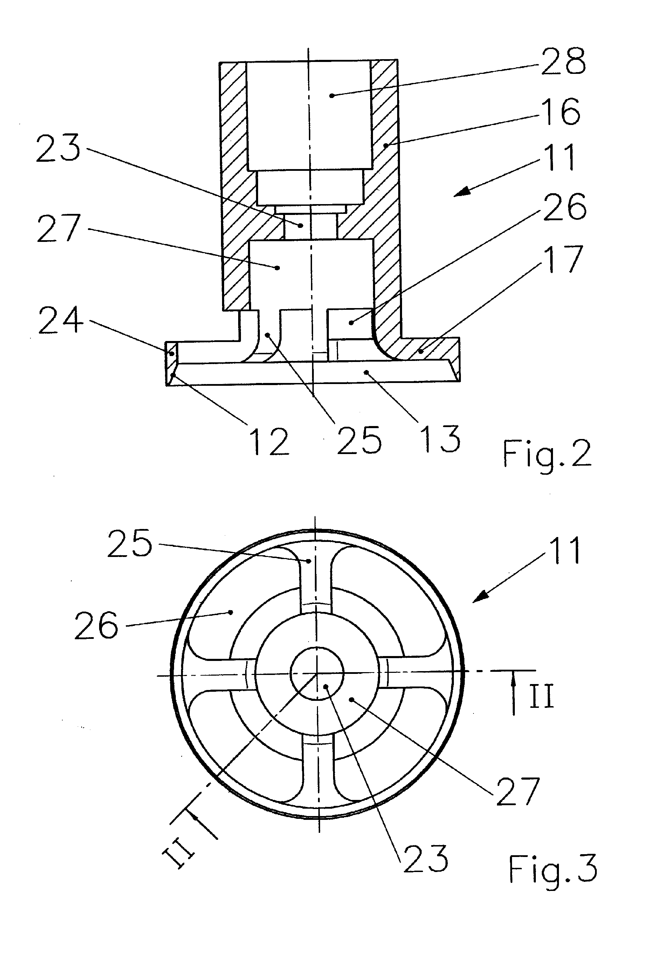

Die vorbeschriebene Problematik bei Ventilschiebern 11 nach dem Stand der Technik wird wesentlich gemildert durch erfindungsgemäße Ventilschieber, wie sie in den Figuren 2 und 3 dargestellt sind. Figur 2 zeigt einen Schnitt durch einen Ventilschieber 11. Die Schnittangabe ist in Figur 3 als II-II bezeichnet. Der in den Figuren 2 und 3 dargestellte Ventilschieber 11 weist wiederum einen Schaft 16 und einen Teller 17 auf, die wiederum einteilig, vorzugsweise als Sinterteil, hergestellt sind. Am äußeren Rand des Tellers 17 erstreckt sich nach unten die Dichtkante 12, die sich nach oben als Ring 24 fortsetzt. Dieser Ring ist nur über Speichen 25 mit dem Schaft 16 verbunden. Dadurch entstehen große nierenförmige Durchbrüche 26 durch den Teller 17. Die Speichen 25 setzen sich am unteren Teil des Schaftes 16 sich axial erstreckend fort, so dass sich die nierenförmigen Durchbrüche 26 bis in den Bereich des Schaftes 16 weitererstrecken. Im unteren Teil des Schaftes 16 ist eine größtmögliche Bohrung 27 angeordnet, so dass der Schaft hier als Hohlzylinder mit geringer Wandstärke ausgebildet ist. Im oberen Bereich des Schaftes 16 sind die üblichen Bohrungen 28 zur Aufnahme der Wendelfedern 19, 20 vorgesehen.

Durch die erfindungsgemäße Ausbildung des Ventilschiebers 11 wird erreicht, dass zum einen genügend Raum für die Turbulenzen geschaffen wurde, so dass sich die Turbulenzen nicht verstärkt als Zugkräfte an der Innenoberfläche der Ausnehmung 13 auswirken können. Des Weiteren sorgen die großen Durchbrüche 26 dafür, dass der durch die Turbulenzen entstandene Unterdruck sich ungestört auf die Rückseite des Tellers 17 überträgt, wobei die Fläche dieser Rückseite nur durch die Dicke der Speichen 25 und des Ringes 24 bestimmt wird, also auch dadurch nur eine geringe Differenzkraft auftreten kann.

Durch die Ausbildung einer großen Bohrung 27 im Schaft 16 wird darüber hinaus erreicht, dass auch hier ein besserer Ausgleich der Turbulenzen entstehen kann und durch den kürzeren Verbindungsweg durch die Bohrung 23 der Durchflusswiderstand verringert wird und ein besserer Duckdifferenzausgleich zwischen der Rückseite des Schaftes 13 und dessen Vorderseite erzielt wird.

### Bezugszeichenliste

- 1.: Dämpferrohr
- 2.: Kolbenstange
- 3.: Arbeitskolben
- 4.: Arbeitsraum
- 5.: Arbeitsraum
- 6.: Federscheibe
- 7.: Durchbruch
- 8.: Ringkanal
- 9.: Zulaufbohrung
- 10.: Radialschlitz
- 11.: Ventilschieber
- 12.: Dichtkante
- 13.: Ausnehmung
- 14.: Bohrung
- 15.: Vorventil
- 16.: Schaft
- 17.: Teller
- 18.: Spule
- 19.: Wendelfeder
- 20.: Wendelfeder
- 21.: Dichtsitz
- 22.: Bohrung
- 23.: Bohrung
- 24.: Ring
- 25.: Speiche
- 26.: Durchbruch
- 27.: Bohrung
- 28.: Bohrung

## Patentansprüche

1. Ventilschieber (1) für ein Bypassventil an einem hydraulischen Schwingungsdämpfer mit einem Schaft (16) und einem Teller (17), welcher mit einer umlaufenden scheibenartig ausgebildeten Dichtkante (12), innerhalb der eine Ausnehmung (13) angeordnet ist, ausgebildet ist und der Durchbrüche (Bohrungen 17) zur Rückseite aufweist, **dadurch gekennzeichnet, dass** die Durchbrüche (26) durch den Teller (17) größtmöglich, nur Speichen (25) zwischen der Dichtkante (12) und dem Schaft (16) belassend, ausgebildet sind.

2. Ventilschieber (1) nach Anspruch 1, **dadurch gekennzeichnet, dass** sich die Durchbrüche (26) und die Speichen (25) bis in den Schaft (16) hinein fortsetzen.

3. Ventilschieber (1) nach Anspruch 1 oder Anspruch 2, **dadurch gekennzeichnet, dass** sich die Ausnehmung (13) bis in den Schaft (16) hinein erstreckt, wobei der Schaft (16) in diesem Bereich als Hohlzylinder mit geringer Wandstärke ausgebildet ist.
